(19) Europäisches Patentamt
European Patent Office
Office européen des brevets

(11) EP 2 825 615 B1

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(21) Anmeldenummer: **13710395.8**

(22) Anmeldetag: **15.03.2013**

(51) Int Cl.:
***C09K 21/14*** *(2006.01)* ***B27N 9/00*** *(2006.01)*
***C08B 31/00*** *(2006.01)* ***C08B 31/06*** *(2006.01)*

(86) Internationale Anmeldenummer:
**PCT/EP2013/055468**

(87) Internationale Veröffentlichungsnummer:
**WO 2013/135890 (19.09.2013 Gazette 2013/38)**

(54) **VERWENDUNG EINES FLAMMSCHUTZMITTELS AUFWEISEND STICKSTOFF- UND PHOSPHORHALTIGE POLYSACCHARIDDERIVATE ZUR VERBESSERUNG DER FLAMMSCHUTZEIGENSCHAFTEN VON HOLZ UND HOLZVERBUNDWERKSTOFFEN**

USE OF FLAME RETARDANTS COMPRISING POLYSACCHARIDE DERIVATIVES CONTAINING NITROGEN AND PHOSPHORUS TO IMPROVE THE FLAME-RETARDANT PROPERTIES OF WOOD AND WOOD COMPOSITE MATERIALS

UTILISATION DES PRODUITS IGNIFUGES PRÉSENTANT DES DÉRIVÉS DE POLYSACCHARIDE À TENEUR EN AZOTE ET EN PHOSPHORE POUR AMÉLIORER LES QUALITÉS IGNIFUGES DU BOIS ET DE MATÉRIAUX COMPOSITES À BASE DE BOIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2012 DE 102012204238**

(43) Veröffentlichungstag der Anmeldung:
**21.01.2015 Patentblatt 2015/04**

(73) Patentinhaber: **Technische Universität Dresden**
**01062 Dresden (DE)**

(72) Erfinder:
- **PASSAUER, Lars**
  **01069 Dresden (DE)**
- **FISCHER, Steffen**
  **01705 Freital (DE)**
- **BENDER, Hans**
  **23966 Wismar (DE)**
- **TECH, Sören**
  **17489 Greifswald (DE)**
- **WAGENFÜHR, André**
  **01109 Dresden (DE)**

(74) Vertreter: **Kailuweit & Uhlemann Patentanwälte Partnerschaft mbB**
**Bamberger Straße 49**
**01187 Dresden (DE)**

(56) Entgegenhaltungen:
**DE-A1- 4 114 068 DE-C1- 19 859 123**
**US-A- 3 250 756**

- **HEINZE U ET AL: "NEW STARCH PHOSPHATE CARBAMIDES OF HIGH SWELLING ABILITY: SYNTHESIS AND CHARACTERIZATION", STARKE - STARCH, WILEY-VCH VERLAG, WEINHEIM, DE, Bd. 55, Nr. 2, 1. Februar 2003 (2003-02-01), Seiten 55-60, XP001143198, ISSN: 0038-9056, DOI: 10.1002/STAR.200390017 in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung eines Flammschutzmittels aufweisend stickstoff- und phosphorhaltige Polysaccharide zur Verbesserung der Flammschutzeigenschaften von Holz und Holzverbundwerkstoffen. Weiterhin Gegenstand der Erfindung ist ein Holzverbundwerkstoff mit verbesserten Flammschutzeigenschaften sowie ein Verfahren zu dessen Herstellung.

Zwar sind Holz und Holzwerkstoffe bereits durch ihren natürlichen Charakter in der Lage, Bränden eine bestimmte Zeit zu widerstehen. Durch die Anwendungen geeigneter Flammschutzmittel kann dieses Vermögen jedoch zusätzlich stark gesteigert werden. Dies ermöglicht, auch unter dem Aspekt der Brandsicherheit, eine empfehlenswerte Verwendung von Holzwerkstoffen als Baustoff. Je nach der geforderten Brandschutzsicherheit können die Flammschutzmittel dabei direkt auf das native oder bereits behandelte Holz aufgebracht werden oder werden direkt bei der Erzeugung von Holzverbundwerkstoffen in diese eingebracht.

Die Mehrzahl der verwendeten konventionellen Brandschutzmittel sind aufgrund ihrer chemischen Zusammensetzung in Bezug auf Toxizität, Umweltverträglichkeit sowie Abbaubarkeit jedoch als kritisch zu betrachten. Man unterscheidet in der Regel zwischen vier Gruppen chemischer Flammschutzmittel (nachfolgend FSM): den anorganischen FSM, den halogenierten FSM, den organischen Phosphorverbindungen sowie den stickstoffbasierten FSM.

Die mengenmäßig größte Gruppe stellen dabei die anorganischen FSM, allen voran die Metallhydroxide, insbesondere Aluminiumhydroxid. Bei Temperaturen von 200 °C beginnt das Aluminiumhydroxid unter Energieverbrauch in einem irreversiblen Prozess zu 66 % in Aluminium und 34 % in Wasser zu zerfallen. Das Wasser wird verdampft, und die Verdunstungskälte kühlt das zu schützende Material. Die Flammschutzwirkung dieses Prozesses ist jedoch vergleichsweise gering, weswegen Metallhydroxide in großen Füllmengen in die zu schützenden Polymere eingebracht werden müssen, was deren Eigenschaften negativ beeinflussen kann.

Die halogenhaltigen Verbindungen wirken auf chemischem Wege flammhemmend, indem in der Gasphase Halogenradikale freigesetzt werden, die Halogenwasserstoffe bilden können.

Durch den Halogenwasserstoff werden bei der Verbrennung entstehende energiereiche Radikale neutralisiert und damit ein Radikalkettenmechanismus unterbrochen, der zur Branderhaltung und -ausbreitung beiträgt. Dabei kommt es jedoch zu starker Rauchentwicklung sowie zur Entstehung von korrosiv wirkenden Rauchgasen. Einige der halogenierten FSM bzw. deren Abbauprodukte sind zudem ökologisch nicht abbaubar und können sich daher im Organismus verschiedener Lebewesen anreichern.

Phosphorhaltige FSM können sowohl organischer als auch rein anorganischer Natur sein und bewirken auf vielfache Art und Weise eine Flammhemmung. Die wichtigsten Reaktionsmechanismen phosphorhaltiger FSM die im Brandfall für eine Flammhemmung bewirken sind die Dehydratation und die Vernetzung bzw. Polymerisation. Bei der Dehydratation kommt es durch Freiwerden von Phosphorsäure zu einer Extraktion von Wasser aus Holzmaterial, was unter anderem eine Abkühlung des Brandgutes durch Verdunstung bewirkt. Bei der Vernetzung kommt es zur Ausbildung einer Schutzschicht aus Polyphosphorsäure auf dem Brandgut, wodurch dieses vor weiterer ungehinderter Sauerstoffzufuhr sowie der Strahlungswärme des Feuers geschützt wird. Nachteilig bei der Arbeit mit Phosphorverbindungen sind insbesondere in gesundheitlichen Gefahren bei der Verarbeitung der Flammschutzmittel zu sehen.

Stickstoff-basierte Flammschutzmittel entfalten ihre Schutzwirkung im Brandfall vor allem durch die Freisetzung von Stickstoff ($N_2$). Dieser wirkt als Schutzgas und unterbindet die Sauerstoffversorgung des Brandherdes

Aus dem Stand der Technik sind zudem Flammschutzmittel bekannt, deren Wirksamkeit auf einer Kombination der hier aufgeführten Klassen von FSM beruht.

Die DE 4114068 A1 beschreibt eine schwer entflammbare Flachpressplatte aus an sich brennbarem Plattenmaterial, dessen Entflammbarkeit durch Zugabe eines Flammschutzmittels gesenkt wird. Das Flammschutzmittel besteht dabei aus einer Kombination von Chemikalien, insbesondere a) einer Substanz, die bei einer erhöhten Temperatur eine anorganische Säure freizusetzen vermag, b) einer kohlenstoffhaltigen Substanz mit veresterbaren Hydroxylgruppen und c) einer Substanz die bei erhöhter Temperatur ein nichtbrennbares Gas freizusetzen vermag. Das Flammschutzmittel ist weiterhin nur gering wasserlöslich und die Ansprechtemperaturen der Substanzen unter a) und c) liegen unter der zur Herstellung der Flachpressplatte nötigen Temperatur. Eine Verbindung oder Reaktion der Chemikalien erfolgt, wenn überhaupt, somit erst im Brandfall, wenn die Temperaturen die Ansprechtemperaturen der Substanzen überschreiten. Die geringe Wasserlöslichkeit der einzelnen Chemikalien lässt eine Behandlung der Flachpressplatte nur im trockenen Zustand, bspw. durch Zugabe von Pulvern oder Granulaten zu. Eine intensive Imprägnierung der Bestandteile der Flachpressplatte oder eine Herstellung derselben im Nassverfahren ist mit einem derartigen FSM nicht möglich. Da die einzelnen Bestandteile des FSM zudem als physikalische Mischung mit den Holzfasern oder -spänen der Flachpressplatte vorliegen, ist ein vollständiger Umsatz der Chemikalien im Brandfall durch eine inhomogene Verteilung der Bestandteile unterbunden.

Mit der US 2010/0178358 A1 wird ein auf Polysacchariden basierendes festes Material offenbart, das zumindest eine aktive Chemikalie aufweist, bei der es sich auch um ein Flammschutzmittel handeln kann. Zusätzlich enthält das Material einen Komplexbildner, der in der Lage ist, das FSM zu binden und dieses mit der polymeren Matrix der Polysaccharide zu verbinden. Das Polysaccharid basierte Material weist zudem Hohlräume mit einer Größe von zwischen $5x10^{-5}$ $mm^3$ und $2x10^{-2}$ $mm^3$ auf. Die Größe des verwendeten Komplexbildners entspricht der Größe dieser Hohlräume oder überschreitet sie. Die Wirkungsweise der aktiven Chemikalie ist in dieser Schrift nicht offenbart. Sie muss jedoch gemäß dieser Schrift komplexiert und mittels eines Vernetzers an das Polysaccharid gepfropft werden, um wirksam zu werden.

Die US 2004/0099178 A1 offenbart ein vernetzte Polysaccharide aufweisendes Flammschutzmittel, das erzeugt wird, indem natürliche oder synthetische Polymere mit Hilfe von Ammoniumsalzen und/oder Phosphaten so vernetzt werden. Das Flammschutzmittel wird dabei nicht auf ein zu schützendes Material aufgetragen oder mit diesem bei dessen Herstellung vermengt. Vielmehr wird ein von vornherein Polysaccharide aufweisendes Material so behandelt, dass die enthaltenen Polysaccharide sich vernetzen und das Material selbst so eine Flammschutzwirkung entfaltet. Die Flammschutzwirkung soll dadurch erzielt werden, dass durch die Vernetzung Wasser in dem Polysaccharid-Polymer eingebettet wird. Im Brandfall werden die Polysaccharid-Polymere stark endotherm zersetzt und das inkorporierte Wasser abgegeben, woraus eine starke Kühlwirkung des Flammschutzmittels resultiert.

Die US 3250756 A offenbart ein Verfahren zur Veresterung von hydroxylgruppenhaltigen Polymeren mit Phosphorsäure, so dass saure Aminophosphate entstehen, wobei auch mehr als eine Hydroxylgruppe der Polymere phosphoryliert werden können. Als hydroxygruppenhaltige polymere Substanzen sind beispielsweise Polyvinylalkohol und dessen Derivate, Polyvinylester, insbesondere teilverseifte Polyvinylacetate, wasserlösliche Cellulosederivate wie Methylcellulose, Stärke wie Amylose, Amylopektin, offenbart. Die polymeren Phosphate weisen eine thermische Stabilität und verminderte Brennbarkeit auf, wodurch sie als flammwidrige Imprägnierungen und für flammwidrige Zusätze zu Kunstharzdispersionen geeignet sind.

**Heinze, *et al.*,** offenbart die chemische Modifikation von Stärke mit Phosphorsäure und Harnstoff. Dabei werden unterschiedliche Stärkederivate verwendet, anhand derer untersucht wird, welchen Einfluss der Einsatz der Reaktanden in verschiedenen molaren Verhältnissen hat. Untersucht werden der Substitutionsgrad, das Quellverhalten, die Molmassen(-verteilung) und die Dispersität der einzelnen Proben. Es wird darauf verwiesen, dass die hergestellten Substanzen in Nahrungsmitteln für industrielle Anwendungen verwendet werden können. (Heinze et al., New Starch Phosphate Carbamides of High Swelling Ability: Synthesis and Characterization, Starch/Stärke 55 (2003) 55-60)

In der WO 91/16403 A1 wird ein Brandschutzmittel beschrieben, das wenigstens ein Entwässerungsmittel (oder Dehydratationsmittel) und ein Kohlehydrat, zum Beispiel Stärke, als Bindemittel enthält. Als Entwässerungsmittel kommen unter anderem Phosphatsalze, Harnstoff, Borsäure oder Aluminiumhydroxide zum Einsatz, die, je nach zu behandelndem Stoff, in einem bestimmten Verhältnis mit dem Bindemittel vermischt werden. Die Vorteile des Brandschutzmittels resultieren aus einer Verstärkung des Effekts des Entwässerungsmittels durch die von dem Kohlenhydrat bzw. der Stärke verursachte Vernetzung innerhalb des zu schützenden Stoffes. Besonders bevorzugt ist die Verwendung des Flammschutzmittels zur Beimengung als Füllstoff in Kunststoffen. Auch bei diesem Flammschutzmittel basiert der Flammschutz-Effekt darauf, dass die Zersetzung des Flammschutzmittels endotherm erfolgt und dadurch dem Verbrennungsvorgang Wärme entzieht. Darüber hinaus fällt als Zersetzungsprodukt des Flammschutzmittels Wasserdampf an, der um das Brandgut eine sauerstoffverdrängende Schutzgasatmosphäre bildet.

Vernetzte oder unvernetzte Polysaccharidderivate werden auch in anderen Bereichen verwendet. So offenbart die die DE 198 59 123 C1 Stärke-Derivate, in denen zumindest einige der verfügbaren Hydroxylgruppen des Polysaccharids, mit oder ohne dessen Vernetzung, durch Phosphatestergruppen verestert sind. Dabei sind die Anhydroglucoseeinheiten durch Phosphatestergruppen und Carbamidgruppen substituiert, wobei der durchschnittliche Substitutionsgrad DS der Carbamidgruppen jeweils in einem Bereich von 0,1 bis 1 liegt. Die Stärke-Derivate werden durch vollständige Umsetzung von Stärke oder stärkehaltigen Materialien mit einem Phosphorylierungsmittel und Harnstoff erhalten. Die Umsetzung erfolgt dabei bei Drücken unter 100 Torr, wodurch leicht flüchtige Komponenten, bspw. Ammoniak, aus dem Reaktionsprodukt ausgetrieben werden. Die Bildung von Ammonium-haltigen Stärkephosphaten wird dadurch weitestgehend unterbunden. Die resultierenden Stärke-Phosphate sind gemäß der Schrift als Klebstoffkomponenten, zur Viskositätsregulierung wässriger Systeme und als Superabsorber geeignet.

Aufgabe der Erfindung ist es, die Nachteile des Standes der Technik zu überwinden und ein verbessertes Flammschutzmittel vorzustellen, dass umweltschonend, einfach und sicher in der Handhabung sowie kostengünstig herstellbar ist. Weiterhin soll ein Holzverbundwerkstoff mit verbesserten Flammschutzeigenschaften zur Verfügung gestellt werden, wobei die verbesserten Flammschutzeigenschaften dabei einfach und kostengünstig durch Maßnahmen während oder nach der Herstellung des Holzverbundwerkstoffs erzielbar sein sollen. Zudem sollen Beeinträchtigungen der Umwelt, bspw. durch Emission toxischer oder persistenter Stoffe, während der Herstellung und der Benutzung des Holzverbundwerkstoffs als auch im Brandfall vermieden werden.

Die erfindungsgemäße Aufgabe wird gelöst durch die Verwendung wasserlöslicher Stickstoff- und Phosphorhaltiger Polysaccharidderivate, jeweils mit einem Stickstoff- sowie Phosphorgehalt von jeweils 2,5 - 25 %, als Flammschutzmittel Holz und Holzverbundwerkstoffen.

Das Flammschutzmittel enthält wasserlösliche oder teilweise wasserlösliche, stickstoff- und phosphorhaltige Polysaccharidderivate mit einem Stickstoff- sowie Phosphorgehalt von jeweils 2,5 - 25%, bevorzugt 5 - 20% und besonders bevorzugt 10 - 15%. Dabei sind die Hydroxylgruppen der Polysaccharidderivate zum Teil durch Phosphatgruppen und Carbamatgruppen verestert wobei der Substitutionsgrad hinsichtlich der Phosphatgruppen 0,02 - 1,5 und der Substitutionsgrad hinsichtlich der Carbamatgruppen 0,01 - 0,5 beträgt.

Es wird ein neuartiges Flammschutzmittel bereitgestellt, das Polysaccharidderivate enthält, deren Hydroxylgruppen, zumindest teilweise, sowohl mit stickstoff- als auch phosphorhaltigen Verbindungen substituiert sind. Der Stickstoff- sowie Phosphorgehalt bezogen auf das Polysaccharid beträgt dabei jeweils 2,5 - 25 %, bevorzugt 5 - 20 % und besonders bevorzugt 10 - 15 %. Die Bestimmung des Gesamt-Stickstoff-Gehalts erfolgt bevorzugt über die Kjeldahl-Methode oder gasanalytisch mittels C/N-Analysator. Die Bestimmung des Gesamt-Phosphor-Gehalts erfolgt bevorzugt photometrisch mittels der Vanadat-Molybdat-Methode oder spektroskopisch, bspw. mittels Raman-Spektroskopie, insofern zur Eichung eines entsprechenden Systems notwendige photometrische Messwerte vorhanden sind [Passauer et al., Carbohydrate Polymers 2010, 82, 809-814]. Die Polysaccharidderivate sind zudem wasserlöslich oder zumindest teilweise wasserlöslich.

Die in dem Flammschutzmittel enthaltenen Polysaccharidderivate haben vorteilhaft eine Vielzahl von Brandschutzeigenschaften, insbesondere für Holzwerkstoffe bzw. Holzverbundwerkstoffe. Diese Wirkung geht zudem vorteilhaft über die flammschützende Wirkung der in die Polysaccharidmoleküle eingeführten funktionellen Gruppen in synergetischer Weise hinaus.

Durch die Integration von stickstoff- und phosphorhaltigen Gruppen weisen die so veränderten Polysaccharidderivate zunächst Flammschutzeigenschaften auf, die direkt auf diese funktionellen Gruppen zurückgeführt werden können. Diese Flammschutzeigenschaften entfalten sich bevorzugt bei hohen Temperaturen aufgrund der thermischen Zersetzung des Flammschutzmittels.

Durch die phosphorhaltigen Verbindungen kommt es zunächst durch die Bildung von Polyphosphorsäure zu einer Dehydratation durch Extraktion von Wasser sowohl aus dem Polysaccharid als auch aus der zu schützenden Holzsubstanz. Das frei werdende Wasser kühlt nicht nur den Brandvorgang. Die Dehydratation führt zu dem zu einer beschleunigten Verkohlung der Holzsubstanz. Die so gebildete Holzkohle fungiert als Isolierschicht und unterbindet eine weitere Ausbreitung der thermischen Zersetzung der Holzsubstanz. Als phosphorhaltige Substanz kann bspw. Ammoniumphosphat in das Polysaccharidmolekül eingeführt werden. Die Bildung von Polyphosphorsäure aus dem Ammoniumphosphat erfolgt dann unter Entstehung von Ammoniak nachfolgender Gleichung:

$$nNH_4H_2PO_4 \xrightarrow{\Delta} (HPO_3)_n + nNH_3 + nH_2O$$

Zudem reagiert die Phosphorsäure zu einer Schicht aus Polyphosphorsäure in der kondensierten Phase:

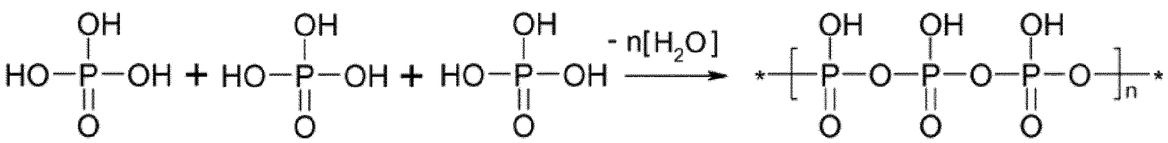


Diese Schicht verhindert einen weiteren ungehinderten Sauerstoffzutritt und schützt die Holzsubstanz vor der Strahlungswärme des Feuers. Zudem wird durch die Polymerisation erneut Wasser frei, welches wiederum zur Kühlung des Brandvorgangs beiträgt.

Die in die Polysaccharidmoleküle eingeführten phosphorhaltigen funktionellen Gruppen bewirken zudem eine Reaktion in der Gasphase, bei der die in der Verbrennung entstehenden energiereichen Radikale durch Phosphorsuboxide (z. B. PO-Radikale) neutralisiert werden, wodurch es zu einer Unterbrechung des im Brand stattfindenden Radikalkettenmechanismus kommt.

Durch die Einführung von Phosphatgruppen in die Polysaccharidmoleküle nimmt zudem vorteilhaft deren hydrophiler Charakter zu. Die Derivatisierung bewirkt dabei insbesondere eine Auflockerung der intermolekularen Bindungen sowie eine Verstärkung des Polyelektrolyteffekts bzw. der Abstoßung von Untergruppen gleicher Partialladung innerhalb des Polymers. Dies führt zu einer Streckung der Polymerketten in Lösung und zu einer Steigerung der Quellleistung, woraus insbesondere ein erhöhtes Wasseraufnahmevermögen, eine verstärkte Neigung zur Gelbildung sowie eine höhere mechanische Stabilität von wässrigen Polysaccharidsuspensionen resultieren, was deren Verarbeitung und Applikation erleichtert.

Die stickstoffhaltigen funktionellen Gruppen im Polysaccharidderivat setzen im Brandfall gasförmigen Stickstoff frei, das als Schutzgas die Versorgung des Brandherdes mit Reaktionssauerstoff erschwert.

Im Zusammenhang mit der bei den phosphorhaltigen Gruppen erwähnten Vernetzung kann es durch den gasförmigen Stickstoff zudem zu einem Aufschäumen der aus Polyphosphorsäure gebildeten Schutzschicht kommen.

Durch das Ausbilden einer voluminösen, isolierenden Schaumschicht wird das brennbare Material abgeschirmt und die Flammen erstickt. Weiterhin wirkt diese Schicht isolierend und schützt das Material effektiv vor Hitze. Dieser Effekt wird als Intumeszenz bezeichnet und erfordert prinzipiell das Vorliegen eines Kohlenstoffdonators, eines Dehydrierungskatalysators und eines Treibmittels. Bei Hitzeeinwirkung wird der Säuredonator freigesetzt. Dieser entzieht dem C-Donator das Wasser und führt zur Verkohlung des Materials. Im erfindungsgemäßen Holzverbundwerkstoff wirken dabei die in dem Flammschutzmittel enthaltenen Phosphorverbindungen als Säuredonator bzw. Dehydrierungskatalysator. Die enthaltenen Stickstoffverbindungen wirken in diesem Zusammenhang als Treibmittel, die das zur Ausbildung des Schaums notwendige Gas $N_2$ freisetzen. Die Polysaccharidmoleküle selbst wirken als Kohlenstoffdonator. Durch das Vorliegen aller zur Intumeszenz notwendigen Stoffe in den Polysaccharidderivaten des Flammschutzmittels des erfindungsgemäßen Holzverbundwerkstoffs ist die Intumeszenz und somit das Ausbilden der schützenden Isolierschicht von Transportvorgängen im Brand weitgehend unabhängig. Die Intumeszenz erfolgt dadurch bei dem erfindungsgemäßen Holzverbundwerkstoff zuverlässiger und intensiver als bei gängigen Werkstoffen. Durch die Regelung des Substitutionsgrades der Polysaccharidderivate können zudem vorteilhaft für die Intumeszenzreaktion benötigten stöchiometrischen Verhältnisse gewährleistet werden.

Die Verkohlung der Holzsubstanz sowie der Polysaccharide erfolgt bei der Intumeszenz bspw. nach folgender Gleichung:

$$(HPO_3)_n + C_x(H_2O)_m \rightarrow ["C"]_x + (HPO_3)_n \text{ x } mH_2O$$

Gleichzeitig wird durch die Gasbildung des stickstoffhaltigen Treibmittels, bspw. Ammoniumphosphat, ein Aufschäumen des karbonisierten Materials unter Bildung einer voluminösen Schutzschicht nach folgendem Schema bewirkt:

$$n\,NH_4H_2PO_4 \xrightarrow{\triangle} (HPO_3)_n + n\,NH_3 + n\,H_2O$$

$$4\,NH_3 + 3\,O_2 \longrightarrow 2\,N_2 + 6\,H_2O$$

Die durch die Intumeszenz entstehenden Schäume bieten einen sehr guten sowie langanhaltenden Hitzeschutz. Die Kombination aller für die Intumeszenz notwendigen Ausgangstoffe in wasserlöslichen Polysaccharidderivaten ermöglicht eine einfache sowie kostengünstige Ausrüstung von Holzwerkstoffen bzw. Holzverbundwerkstoffen mit Brandschutz verbessernden Eigenschaften. Durch die Wasserlöslichkeit ist zudem vorteilhaft sowohl eine intrinsische als auch eine externe Behandlung der Holz- bzw. Holzverbundwerkstoffe mit dem Flammschutzmittel möglich.

Im erfindungsgemäß verwendeten Flammschutzmittel weisen die Polysaccharide neben der Derivatisierung mit Phosphatgruppen auch eingebaute Carbamatgruppen auf. Dadurch liegen Polysaccharidderivate vor, deren Hydroxylgruppen zumindest teilweise durch Phosphatgruppen und Carbamatgruppen verestert sind. Dabei beträgt der Substitutionsgrad hinsichtlich der Phosphatgruppen 0,02 - 1,5 und bevorzugt 0,2 - 0,90 und der Substitutionsgrad hinsichtlich der Carbamatgruppen 0,01 - 0,5 und bevorzugt 0,05 - 0,1. Der Substitutionsgrad (degree of substitution, DS) gibt dabei die durchschnittliche Anzahl von eingeführten Substituenten je Polysaccharidmonomer an. Bei Stärke oder Cellulose handelt es sich bei diesem Monomer um Anhydroglucose mit der Summenformel $C_6H_{10}O_5$.

Diesem Monomer stehen maximal 3 reaktive OH-Gruppen an C2-, C3- und C6-Atom zur Verfügung. Der Substitutionsgrad kann hier also maximal 3 betragen. Bei Stärkephosphaten werden laut Literatur maximale DS-Werte von 2 erreicht. Der $DS_P$ an Phosphatgruppen wird aus dem wie oben beschrieben photometrisch oder spektroskopisch ermittelten P-Gehalt (P in %; siehe oben) und der DSc an Carbamatgruppen aus dem mittels modifizierter Kjeldahl-Methode ermittelbaren Amid-N-Gehalt (Nc in %) berechnet.

$$DS_P = \frac{162P}{3100 - 114P} \qquad DS_C = \frac{162N_C}{1400 - 44N_C}$$

Insofern in den Polysacchariden Anhydroglucoseeinheiten enthalten sind, hängt die Menge der in die diese eingeführten Phosphat- und Carbamatgruppen vom molaren Verhältnis Anhydroglucoseeinheit (AGU) zu Phosphorsäure ($H_3PO_4$) zu Harnstoff ($CH_4N_2O$) sowie von den Reaktionsbedingungen bei der Herstellung der Polysaccharidderivate ab (beschrieben bei Heinze, Klemm, Unger, Pieschel (2003) Starch 55, 55-60 sowie in der DE 198 59 123 C1. Insbesondere bei hohen Temperaturen kann es zu weiteren Reaktionen kommen, wobei Polysaccharidmoleküle durch Wechselwirkung mit Carbamatgruppen oder durch Wechselwirkung der Carbamatgruppen untereinander vernetzt werden. Diese Vernetzung hat einen positiven Effekt auf die Flammschutzwirkung, da sie der Polymerisierung der Polysaccharide bei der Intumeszenz zuträglich ist.

Für den Fall, dass es sich bei den Polysacchariden um Stärke handelt, wird zudem vermutet, dass der Substitutionsgrad durch das Verhältnis Amylose zu Amylopektin der jeweiligen Stärken beeinflusst wird.

Bei Stärkephosphat-Carbamaten erfolgt die Bildung der Carbamatgruppen nach folgendem Schema:

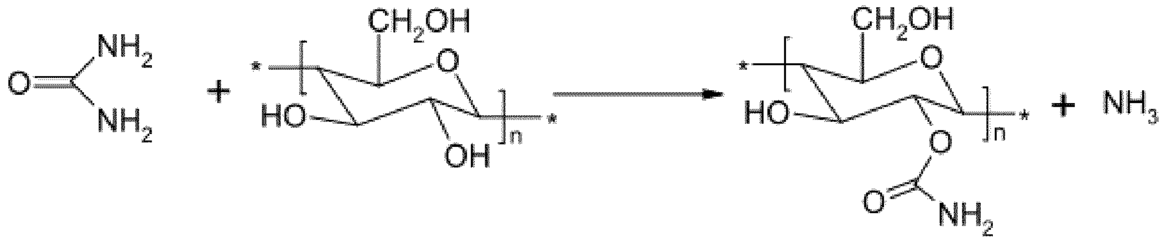

Bei hohen Temperaturen treten vorteilhaft zusätzliche Vernetzungen zwischen den Stärkemolekülen auf, wodurch eine Verbesserung der Flammschutzeigenschaften erzielt wird. Durch die Vernetzungen wird insbesondere der Polymerisationsschritt während der Intumeszenz positiv beeinflusst.

Die Vernetzung der Stärkemoleküle erfolgt dabei einerseits über die Verbindung von Carbamatgruppen und Stärkemolekül, insbesondere durch eine Esterbindung zwischen der Carbamatgruppe am C2-Atom und der Hydroxylgruppe am C6-Atom der beiden Anhydroglucoseeinheiten:

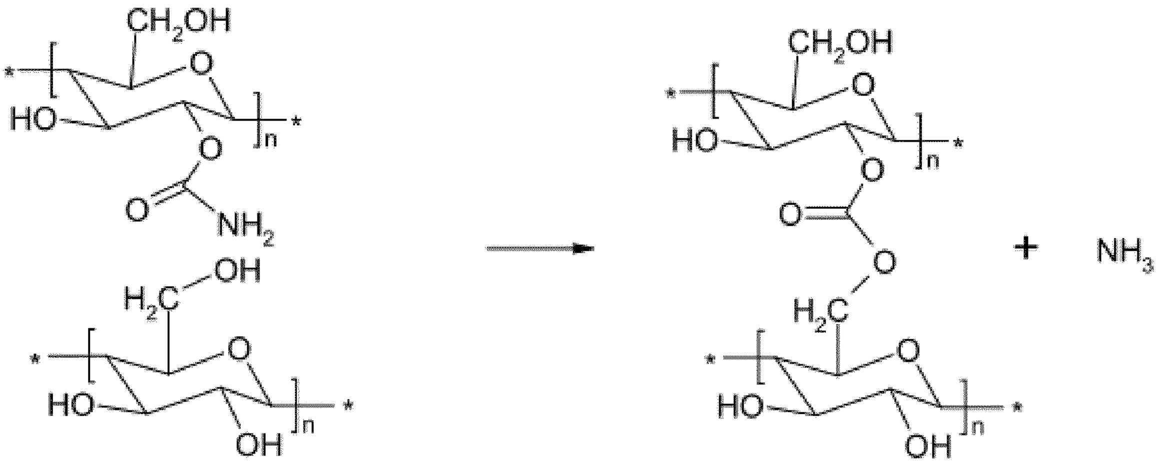

Die Vernetzung der Stärkemoleküle erfolgt zudem über die Verbindung von Stärke-Carbamaten untereinander, insbesondere durch die Verbindung einer Carbamatgruppe am C2 des einen Moleküls und einer weiteren Carbamatgruppe am C6-Atom eines benachbarten Stärkecarbamats unter Freisetzung von Ammoniak:

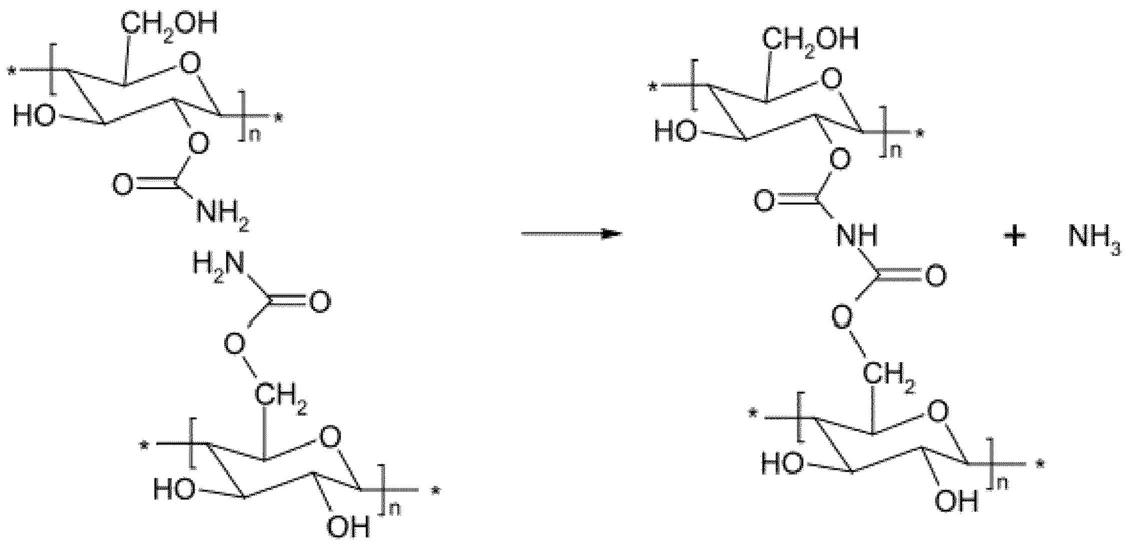

In einer bevorzugten Ausführungsform des erfindungsgemäß verwendeten Flammschutzmittels sind die zusätzlichen Phosphatverbindungen und/oder der zusätzliche Harnstoff bei der Derivatisierung der Polysaccharide nicht mit den Hydroxylgruppen umgesetzt oder dem Flammschutzmittel nachträglich beigemischt. Das Flammschutzmittel enthält zusätzliche Phosphatverbindungen und/oder Harnstoff. Dabei handelt es sich entweder um Verbindungen, die bei der Derivatisierung der Polysaccharide nicht umgesetzt wurden oder um Verbindungen, die dem Flammschutzmittel nachträglich, also nach der Derivatisierung der Polysaccharide, beigemischt wurden. Diese phosphor- bzw. stickstoffhaltigen Verbindungen tragen, wie oben beschrieben, zur Verstärkung der Flammschutzwirkung des Flammschutzmittels bei. Vorteilhaft kann durch die zusätzlichen Phosphatverbindungen und/oder Harnstoff der Ablauf der Intumeszenz Reaktionen positiv beeinflusst werden, insbesondere wenn aufgrund eines niedrigen Substitutionsgrades der Polysaccharide ein ungünstiges Verhältnis der Ausgangsstoffe in den Polysaccharidderivaten selbst vorliegt.

In einer bevorzugten Ausführungsform des erfindungsgemäß verwendeten Flammschutzmittels liegt der zusätzliche Harnstoff zumindest teilweise als Polysaccharid-Harnstoff-Komplex vor, wobei der Harnstoff durch Wechselwirkung mit den Hydroxylgruppen der Amylose fest in die helicale Struktur der Stärke inkorporiert ist. Bevorzugt ist das Vorliegen zusätzlichen Harnstoffs im Flammschutzmittel, wobei dieser zumindest teilweise als Polysaccharid-Harnstoff-Komplex vorliegt. Besonders bevorzugt ist das Vorliegen zusätzlichen Harnstoffs im Flammschutzmittel, in dem als Polysaccharide Stärkeverbindungen enthalten sind. In diesen ist der Harnstoff durch Wechselwirkung mit den Hydroxylgruppen der Amylose fest in die helicale Struktur der Stärke inkorporiert. Der in dem Flammschutzmittel enthaltene Harnstoff zerfällt unter Wärmeeinwirkung in Kohlenstoffdioxid und Ammoniak, wobei das Ammoniak bei gleichen Bedingungen weiter zu Wasser und elementarem Stickstoff reagiert. Diese Reaktionsprodukte wirken als Treibgase und fördern dadurch vorteilhaft den Intumeszenz-Effekt. Weiterhin vorteilhaft wirkt der Stickstoff zudem durch seine Schutzgaswirkung brandhemmend und das Wasser kühlt den Brand.

In einer bevorzugten Ausführungsform des erfindungsgemäß verwendeten Flammschutzmittels sind die Polysaccharide Speicherpolysaccharide oder Strukturpolysaccharide. Als Polysaccharide kommen im Rahmen dieser Erfindung bevorzugt Speicherpolysaccharide, besonders bevorzugt Stärke, die aus dieser gewonnenen Dextrine sowie Dextran zum Einsatz. Weiterhin bevorzugt kommen Strukturpolysaccharide, besonders bevorzugt Cellulose, Hemicellulosen, Pektin, Chitin/Chitosan, Agar, Carageen und Alginate zum Einsatz. Die Verwendung von Speicherpolysacchariden, insbesondere Stärke und Dextrin als Polysaccharide ist besonders vorteilhaft, da diese sich im Vergleich zu Strukturpolysacchariden, insbesondere Cellulose oder Chitin, vergleichsweise einfach phosphatieren lassen, wobei hohe Substitutionsgrade durch Phosphatgruppen ($DS_P \leq 2$) erreicht werden können.

Wasserlöslich bedeutet im Sinne der Erfindung, dass die Polysaccharidderivate, wie z.B. Dextrine oder Dextrane bis zu ihrer jeweiligen Sättigungskonzentration enthalten sein können. Die Löslichkeiten der Polysaccharidderivate sind dabei dem Fachmann bekannt.

Darüber hinaus können die Polysaccharidderivate oberhalb ihrer Sättigungskonzentration auch kolloidal gelöst sein. Viele Polysaccharide, wie z.B. Stärke oder Cellulose sind in Wasser gar nicht oder nur kolloidal löslich. Teilweise wasserlöslich bedeutet daher im Sinne der Erfindung, dass die Polysaccharidderivate ausschließlich kolloidal gelöst sind.

Bevorzugt enthält das Flammschutzmittel eines oder Kombinationen der folgenden Polysaccharidderivate:

a) Nicht vernetzte Monophosphatester
b) Vernetzte Monophosphatester
c) Di- und Triphosphate
d) Carbamate
e) Phosphat-Carbamate
f) Urethane / Polyurethane
g) Polysaccharid-Harnstoffkomplexe

Im Sinne der Erfindung bestehen Polysaccharide aus Polysaccharidmonomeren, wobei ein Polysaccharidmonomer in dem Polysaccharid bevorzugt drei veresterbare Hydroxylgruppen aufweist.

Polysaccharidderivate, die gemäß a) oder c) Mono-, Di- oder Triphosphatester enthalten, sind im Sinne der Erfindung Polysaccharidderivate, bei denen eine, zwei oder drei Hydroxylgruppen der Polysaccharidmonomere durch Phosphatgruppen verestert sind.

Bei Polysaccharidderivaten, die gemäß b) vernetzte Monophosphatester enthalten, handelt es sich im Sinne der Erfindung um mindestens zwei Polysaccharidmonomere (gleicher oder unterschiedlicher Polysaccharide) die miteinander über eine Phosphatgruppe verestert sind.

Polysaccharidderivate, die gemäß d) Carbamate enthalten, sind im Sinne der Erfindung Polysaccharidderivate, bei denen mindestens eine Hydroxylgruppe der Polysaccharidmonomere durch eine Carbamatgruppe verestert ist.

Erfindungsgemäß verwendete Polysaccharidderivate, die gemäß e) Phosphat-Carbamate enthalten weisen Polysaccharidmonomere auf, bei denen eine, zwei oder drei Hydroxylgruppen der Polysaccharidmonomere durch Phosphatgruppen oder Carbamatgruppen verestert sind.

Polysaccharidderivate, die gemäß g) Polysaccharid-Harnstoffkomplexe enthalten, weisen im Sinne der Erfindung zusätzlichen Harnstoff auf, bei denen der zusätzliche Harnstoff durch Wechselwirkungen mit den Hydroxylgruppen des Polyssacharids fest in die helicale Struktur der Stärke inkorporiert ist.

Polysaccharidderivate enthaltend Polyurethane gemäß f) weisen im Sinne der Erfindung bevorzugt mindestens zwei Polysaccharidmonomere (gleicher oder unterschiedlicher Polysaccharide) auf, die miteinander durch eine Carbamatgruppe verestert sind.

Die erfindungsgemäße Aufgabe wird weiterhin gelöst, durch einen Holzverbundwerkstoff mit verbesserten Flammschutzeigenschaften. In dem erfindungsgemäßen Holzverbundwerkstoff liegen dabei 1 - 50 Gew.-% stickstoff- und phosphorhaltige Polysaccharidderivate, mit einem Stickstoff- und Phosphorgehalt von jeweils 2,5 - 25 %, und 0,5 - 5 Gew.-% Bindemittel und/oder Zuschlagstoffe im Verbund mit lignocellulosehaltigen Fasern und/oder Spänen vor. Der Holzverbundwerkstoff hat zudem eine Gesamtdichte von 50 - 1200 kg/$m^3$. Weiterhin bevorzugt ist ein Holzverbundwerkstoff, aufweisend ein Flammschutzmittel, enthaltend zusätzliche Phosphatverbindungen und/oder zusätzlichen Harnstoff.

Als Holzverbundwerkstoff sind dabei Holzwerkstoffe in Form von Platten oder Formkörpern aus nachwachsenden Rohstoffen bezeichnet. Als Rohstoffe kommen dabei bspw. Hanf, Raps- oder Getreidestroh, Seegras oder Bambus in Betracht. Die Holzverbundwerkstoffe werden bevorzugt aus lignocellulosehaltigen Faserstoffen oder Spänen hergestellt, die durch mechanische oder thermo-mechanische Zerfaserung, bspw. im Defibrator oder Refiner gewonnen werden.

Holzverbundwerkstoffe sind z. B. Sperrhölzer aber auch Span-, Faser-, MSB- und OSB-Platten, die aus Holzpartikeln durch Verpressen mit Bindemitteln gefertigt werden. Zu den Hölzern gehören nach der Erfindung Bauhölzer und Massivholzplatten.

In einer vorteilhaften Ausgestaltung des erfindungsgemäßen Holzverbundwerkstoffs liegen die stickstoff- und phosphorhaltigen Polysaccharidderivate mit einem Anteil von 1 - 50 Gew.-%, bevorzugt 5- 30 Gew.-% und besonders bevorzugt 10 - 20 Gew.-% im Holzverbundwerkstoff vor. Durch die Einstellung der Anteile des Flammschutzmittels bzw. der Polysaccharidderivate im Holzverbundwerkstoff können vorteilhaft sowohl die Brandschutzeigenschaften als auch die mechanischen Eigenschaften des Holzverbundwerkstoffs eingestellt werden.

Die Polysaccharidderivate liegen entweder allein oder gemeinsam mit Bindemitteln und/oder Zuschlagstoffen im Verband mit lignocellulosehaltigen Fasern und/oder Spänen im Holzverbundwerkstoff vor. Im zweiten Fall beträgt der Anteil der Bindemittel und/oder Zuschlagstoffe 0,5 - 5 Gew.-%, bevorzugt 0,5 - 3 Gew.-% und besonders bevorzugt 1 - 2 Gew.-%. Der erfindungsgemäß Einsatz eines Flammschutzmittels enthaltend stickstoff- und phosphorhaltige Polysaccharidderivate ermöglicht vorteilhaft den vollständigen oder teilweisen Verzicht auf Bindemittel, da die Polysaccharidderivate selbst als Bindemittel wirken. Der Einsatz der Polysaccharidderivate als Bindemittel erfolgt bevorzugt bei im Nassverfahren oder Halbtrockenverfahren hergestellten Holzverbundwerkstoffen und wird durch die Wasserlöslichkeit des Flammschutzmittels, insbesondere der stickstoff- und phosphorhaltige Polysaccharidderivate, ermöglicht. Bevorzugt sind die Zuschlagstoffe und/oder Bindemittel ebenfalls Stickstoff- und Phosphorhaltige Polysaccharidderivate.

Weiterhin bevorzugt beträgt die Dichte des Holzverbundwerkstoffs 50 - 1200 kg/$m^3$, bevorzugt 100 - 800 kg/$m^3$ und besonders bevorzugt 200 - 500 kg/$m^3$. In einer besonders bevorzugten Ausgestaltung des Holzverbundwerkstoffs enthält dieser lediglich lignocellulosehaltige Späne und/oder Fasern sowie das Flammschutzmittel. Dann weisen die stickstoff- und phosphorhaltigen Polysaccharidderivate selbst Bindemittelwirkung auf. Somit kann auf die Zugabe eines zusätzlichen Bindemittels vorteilhaft verzichtet werden

Weiterhin Gegenstand der Erfindung ist ein Verfahren zur Herstellung eines Holzverbundwerkstoffs mit verbesserten Flammschutzeigenschaften aus lignocellulosehaltigen Fasern oder Spänen, wobei lignocellulosehaltigen Holzfasern oder - späne

a) mit einer Stickstoff- sowie Phosphor-haltige Polysaccharidderivate enthaltenden Lösung oder Suspension benetzt oder

b) mit Stickstoff- sowie Phosphor-haltige Polysaccharidderivate in Form eines trockenen Pulvers oder Granulats vermischt oder

c) mit Stickstoff- sowie Phosphorhaltige Polysaccharidderivate enthaltenden Bindemittel vermischt

und anschließend verdichtet und/oder verpresst werden.

In einer ersten Ausführungsform des erfindungsgemäßen Verfahrens, werden die lignocellulosehaltigen Holzfasern- oder Späne mit einer Lösung benetzt, die stickstoff- sowie phosphorhaltige Polysaccharide enthält. Diese Benetzung erfolgt bevorzugt als Prozessschritt in einem Verfahren zur Herstellung eines Holzverbundwerkstoffs im Nassverfahren. Dabei wird zunächst das Rohmaterial zerkleinert und aufbereitet. Anschließend wird das so bereit gestellte Industrieholz oder Hackgut vorbehandelt und zerfasert und somit Faserstoff erzeugt. Nach einer optionalen Aufbereitung des Faserguts, bspw. durch Sortierung, Mahlen oder Trocknung werden diesem anschließend Bindemittel und/oder Zuschlagstoffe beigemischt. Bevorzugt erfolgt die Zugabe der die Polysaccharidderivate enthaltenden Lösung in diesem

Prozessschritt. Aus dem so erhaltenen Faserbrei wird anschließend ein Faservlies gebildet aus dem mittels Heißpressen und Trocknung des Holzverbundwerkstoffes der fertige Holzverbundwerkstoff entsteht.

Die Zugabe der die modifizierten Polysaccharide enthaltenden Lösung erfolgt dabei besonders bevorzugt auf absolut trockenen Faserstoff (atro). Weiterhin bevorzugt wird die Lösung einem Faserstoff allein oder gemeinsam mit einem Bindemittel über ein Beleimaggregat zugeführt. Vor der Zuführung kann es notwendig sein, die Polysaccharidderivate in Wasser quellen zu lassen um eine gut fließfähige Lösung bzw. Suspension zu erhalten. Sollte es durch die Zugabe von Wasser als Träger für die Polysaccharide zu einem Verklumpen der Fasern kommen, werden diese bevorzugt in einem zusätzlichen Verfahrensschritt vor der Formung des Vlieses vereinzelt, wobei Flugscharmischer oder Refiner zum Einsatz kommen können.

In einer zweiten Ausführungsform des erfindungsgemäßen Verfahrens werden die mit stickstoff- sowie phosphorhaltige Polysaccharidderivate in Form eines trockenen Pulvers oder Granulats mit lignocellulosehaltigen Fasern oder Spänen vermischt. Diese Zugabe erfolgt bevorzugt als Prozessschritt in einem Verfahren zur Herstellung eines Holzverbundwerkstoffs im Trockenverfahren. Dabei wird zunächst das Rohmaterial zerkleinert und aufbereitet. Anschließend wird das so bereit gestellte Industrieholz oder Hackgut vorbehandelt und zerfasert und somit Faserstoff erzeugt. Anschließend werden entweder die noch feuchten Fasern zunächst beleimt und anschließend getrocknet, wobei die Reihenfolge dieser Schritte auch umgekehrt werden kann. Bevorzugt erfolgt die Zugabe des die Polysaccharidderivate enthaltenden Pulvers/Granulates im Beleimungsschritt. Dabei kann die Zugabe des Polysaccharidderivate zusätzlich zur Beleimung erfolgen oder diese, aufgrund der Bindemittelwirkung der Derivate, vollständig ersetzen. Die so mit dem Polysaccharidderivaten versetzten Fasern und/oder Späne werden anschließend im trockenen Zustand zum fertigen Holzverbundwerkstoff verdichtet bzw. gepresst.

In einer dritten Ausgestaltung des erfindungsgemäßen Verfahrens liegen die stickstoff- sowie phosphorhaltigen Polysaccharidderivate als Bestandteile in einem Bindemittel vor oder machen dieses Bindemittel vollständig aus. Die Herstellung des Holzverbundwerkstoffs erfolgt dann nach einem beliebigen aus dem Stand der Technik bekannten Verfahren, wobei die Zugabe der Polysaccharidderivate gemeinsam mit dem Bindemittel stattfindet. Vorteilhaft können so bestehende Herstellungsprozesse von Holzverbundwerkstoffen einfach und kostengünstig an die Verwendung der stickstoff- sowie phosphorhaltigen Polysaccharidderivate als Flammschutzmittel angepasst werden. Nach der Vermischung der lignocellulosehaltigen Fasern oder Späne mit dem Bindemittel werden diese in gewohnter Weise zu Holzverbundwerkstoffen verdichtet bzw. gepresst.

Weiterhin Gegenstand der Erfindung ist ein Verfahren zur Flammschutz verbessernden Ausrüstung eines Holz- bzw. Holzverbundwerkstoffes, wodurch ebenfalls ein erfindungsgemäßer Holzverbundwerkstoff erzeugt wird. Die Ausrüstung eines konventionellen Holz- bzw. Holzverbundwerkstoffes erfolgt dabei dadurch, dass dieser nach seiner Herstellung mit einer Beschichtung versehen wird, die stickstoff- und phosphorhaltige Polysaccharidderivate enthält. Diese Beschichtung kann dabei durch Aufstreichen, Aufsprühen oder Tauchen appliziert werden kann. Dabei kann die gesamte Oberfläche des Holzverbundwerkstoffs oder nur Teile davon mit einer oder mehrerer Schichten der Beschichtung versehen werden.

In einer bevorzugten Ausführungsform der erfindungsgemäßen Verfahren sind die stickstoffsowie phosphorhaltigen Polysaccharidderivate wasserlöslich und weisen einen Stickstoffsowie Phosphorgehalt von jeweils 2,5 - 25%, bevorzugt 5 - 20% und besonders bevorzugt 10 - 15% auf. Die Bestimmung des Gesamt-Stickstoff-Gehalts erfolgt bevorzugt über die Kjeldahl-Methode oder gasanalytisch mittels C/N-Analysator. Die Bestimmung des Gesamt-Phosphor-Gehalts erfolgt bevorzugt photometrisch mittels der Vanadat-Molybdat-Methode oder spektroskopisch, bspw. mittels Raman-Spektroskopie.

Weiterhin bevorzugt werden die stickstoff- und phosphorhaltigen Polysaccharidderivate in den erfindungsgemäßen Verfahren in einem Anteil von 1 - 50 Gew.-%, bevorzugt 5 - 30 Gew.-% und besonders bevorzugt 10 - 20 Gew.-% mit den lignocellulosehaltigen Fasern und/oder Spänen gemischt

In einer ebenfalls bevorzugten Ausführung werden den lignocellulosehaltigen Fasern und/oder Spänen zusätzlich Bindemittel und/oder Zuschlagsstoffe mit einem Anteil von 0,5 - 5 Gew.-%, bevorzugt 0,5 - 3 Gew.-% und besonders bevorzugt 1 - 2 Gew.-% beigemischt.

Je höher der Anteil des Flammschutzmitttels im Holzverbundwerkstoff und umso höher der Stickstoff- bzw. Phosphorgehalt in den Polysaccharidderivaten, umso besser die Brandschutzwirkung des Flammschutzmittels. Die Zugabe weiterer Zuschlagsstoffe und/oder Bindemittels kann die Brandschutzwirkung weiter erhöhen sowie bei hohen Anteilen von Brandschutzmittel möglicherweise auftretenden Verarbeitungsproblemen entgegenwirken. Weiterhin Gegenstand der Erfindung ist die Verwendung wasserlöslicher Stickstoff- und Phosphor-haltiger Polysaccharidderivate gemäß Anspruch 1. Die Bestimmung des Gesamt-Stickstoff-Gehalts erfolgt bevorzugt über die Kjeldahl-Methode oder gasanalytisch mittels C/N-Analysator. Die Bestimmung des Gesamt-Phosphor-Gehalts erfolgt bevorzugt photometrisch mittels der Vanadat-Molybdat-Methode oder spektroskopisch, bspw. mittels Raman-Spektroskopie. Das zur Verwendung geeignete Flammschutzmittel kann dabei zusätzliche Phosphatverbindungen und/oder zusätzlichen Harnstoff enthalten.

Es werden Polysaccharide verwendet, deren Hydroxylgruppen zumindest teilweise durch Phosphatgruppen und Carbamatgruppen verestert sind, wobei der Substitutionsgrad der Phosphatgruppen 0,02 - 1,5 und bevorzugt 0,2

- 0,90 und der Substitutionsgrad der Carbamatgruppen 0,01 - 0,5 und bevorzugt 0,05 - 0,1 beträgt. Der Substitutionsgrad hinsichtlich der Phosphatgruppen und der Carbamatgruppen bezieht sich dabei auf die durchschnittliche Anzahl von eingeführten Substituenten je Polysaccharidmonomer.

Ebenfalls bevorzugt ist die Verwendung von Polysaccharidderivaten sowie zusätzlichen Phosphatverbindungen und/oder Harnstoff zur Flammschutz verbessernden Ausrüstung von Holz bzw. Holzverbundwerkstoffen. Die Phosphatverbindungen und/oder Harnstoff können dabei bei der Derivatisierung der Polysacchariden nicht vollständig umgesetzt oder diesen nach der Derivatisierung beigemischt worden sein. Weiterhin bevorzugt ist die Verwendung von Polysaccharidderivaten, die zusätzlichen Harnstoff enthalten, der zumindest teilweise als Polysaccharid-Harnstoff-Komplex vorliegt, zur Flammschutz verbessernden Ausrüstung von Holzverbundwerkstoffen. Besonders bevorzugt werden dabei als Polysaccharide Stärkemoleküle verwendet, wobei der zusätzliche Harnstoff durch Wechselwirkungen mit den Hydroxylgruppen der Amylose fest in die helicale Struktur der Stärke inkorporiert ist.

Als Polysaccharide werden bevorzugt Speicherpolysaccharide, insbesondere Stärke, aber auch Dextrin und Dextran und besonders bevorzugt Stärke sowie Strukturpolysaccharide, bevorzugt Cellulose, Hemicellulosen, Pektin, Chitin/ Chitosan, Agar, Carrageen und Alginat verwendet. Diese liegen für die Verwendung zur Flammschutz verbessernden Ausrüstung von Holz- bzw. Holzverbundwerkstoffe bevorzugt in der Form von nicht vernetzten Monophosphatestern, vernetzten Monophosphatestern, Di- und Triphosphaten, Carbamaten, Phosphat-Carbamaten, Urethanen/Polyurethanen und/oder Polysaccharid-Harnstoffkomplexen vor.

Eine besonders bevorzugte Verwendung von stickstoff- und phosphorhaltigen Polysaccharidderivaten, jeweils mit einem Stickstoff- sowie Phosphorgehalt von jeweils 2,5 - 25 %, oder eines Flammschutzmittels liegt darin, diese mit einem Anteil von 1 - 50 Gew.-%, bevorzugt 5- 30 Gew.-% und besonders bevorzugt 10 - 20 Gew.-%, mit oder ohne Zugabe von Bindemittel oder Zuschlagstoffen mit lignocellulosehaltigen Fasern oder Spänen zu vermischen und diese Mischung anschließend zu Holzverbundwerkstoffen zu verarbeiten. Die Herstellung der Holzverbundwerkstoffe kann dabei im Trocken-, Halbtrocken- sowie Nassverfahren erfolgen.

Ebenfalls bevorzugt ist die Verwendung von stickstoff- und phosphorhaltigen Polysaccharidderivaten zur Verbesserung der Flammschutzeigenschaften von Holz, Holzwerkstoffen oder Holzverbundwerkstoffen, wobei die Polysaccharidderivate als Beschichtung auf einem Holz, Holzwerkstoff oder Holzverbundwerkstoff appliziert werden.

Weiterhin beschrieben ist ein Verfahren zur Verbesserung der Flammschutzeigenschaften von lignocellulosehaltigem Material, insbesondere von Holz oder Holzverbundwerkstoffen, wobei Lignosecellulose-haltiges Material, insbesondere Holz oder Holzverbundwerkstoffe, mit einem Flammschutzmittel, enthaltend wasserlösliche Polysaccharidderivate mit einem Stickstoff- und Phosphorgehalt von jeweils 2,5 - 25%, behandelt wird. Dabei sind die Hydroxylgruppen der Polysaccharide zum Teil durch Phosphatgruppen und Carbamatgruppen verestert, wobei bevorzugt der Substitutionsgrad der Phosphatgruppen 0,02 - 1,5 und der Substitutionsgrad der Carbamatgruppen 0,01 - 0,5 beträgt. In einer bevorzugten Ausführung werden Stickstoff- und Phosphor-haltige Polysaccharidderivate in einem Anteil von 1 - 50 Gew.-% mit oder ohne Zugabe von Bindemitteln und/oder Zuschlagstoffen mit lignocellulosehaltigen Fasern oder Spänen gemischt und diese Mischung zu Werktsoffen, insbesondere Holzverbundwerkstoffen, weiterverarbeitet. Ebenfalls bevorzugt wird das Flammschutzmittel als Beschichtung auf lignocellulosehaltiges Material, insbesondere auf Holz oder einen Holzverbundwerkstoff appliziert.

Anhand folgender Ausführungsbeispiele und Figuren wird die Erfindung verdeutlicht ohne diese zu beschränken. Dabei zeigen:

**Fig. 1:** Fingerprint-Regionen der Raman-Spektren von nativer Amylostärke (a) und von drei mit dem Verfahren behandelte Amylostärken, geordnet nach aufsteigendem Substitutionsgrad (DSp) an Phosphatgruppen (b-d). Der $DS_P$ der Amylostärke steigt von Spektrum (b) $DS_P$=0,27 über Spektrum (c) $DS_P$=0,63 zu (d) $DS_P$=0,90 hin an (Intensitätszunahme der C-O-P-Valenzschwingungen bei 975 und 820 $cm^{-1}$;

**Fig. 2:** Raman-Spektren eines Amylostärkederivates als Ammoniumsalz (Ammoniumstärkephosphatcarbamat; Spektrum a) und der entsprechenden Natrium-Form (Spektrum b) nach Austausch von Ammonium mit Natrium durch Suspendieren des Amylostärkederivates in Natriumbicarbonat-Lösung; $\delta(NH_4^+)$ bei 1700 $cm^{-1}$).

**Fig.3:** Eine schematisch-strukturelle Darstellung der Sorption von Ammonium an ein Polysaccharidderivat mit veresterter Phosphatgruppe.

**Ausführungsbeispiel 1 - Herstellung von Stärkephosphat-Carbamaten**

Es wurden drei unterschiedliche Stärkearten untersucht und derivatisiert. Dabei handelt es sich um eine Kartoffelstärke (Emsland-Stärke GmbH Emlichheim, Superior) (KSE), eine Wachsmaisstärke (Cerestar Deutschland GmbH, Krefeld) (WMS) und um eine Amylo-Stärke (National Starch, Neustadt) (AMS). Nachfolgende Tabelle zeigt die gewichtsmittleren Molmassen (Mw) sowie den Amyloseanteil der drei Stärken.

| Stärkeart | Mw 10 6 [g/mol] | Amyloseanteil [%] |
|---|---|---|
| WMS | 46,11 | <5 |
| AMS | 2,33 | 65 |
| KSE | 28,28 | 22 |

WMS besitzt mit > 95 % den größten Amylopektinanteil und damit auch die größte gewichtsmittlere Molmasse (Mw). KSE nimmt mit 78 % Amylopektin und einer mittleren Molmasse von 28,28 g/mol die Zwischenstellung der drei Stärken ein. Die geringste Mw aufgrund des hohen Amyloseanteils von 65 % hat die AMS.

Die in dieser Arbeit hergestellten Stärkephosphat-Carbamate wurden in Anlehnung an *Heinze et al.* [Heinze U., Klemm D., Unger E., Pieschel F.; New Starch Carbamides of High Swelling Ability: Synthesis and Characterization, Starch, 2003, 55, 55-60] erzeugt. Die Umsetzung der Stärken erfolgte mit Phosphorsäure und Harnstoff im Trockenschrank *(vgl. nachfolgende Tabelle).*

| **Nr.** | **Mol. -Verhältnis** [AGU/ $H_3PO_4$/ Urea] | **Molmasse [g/mol]** | **H3PO4 (85 %) [ml]** | **Temperatur TS [°C] und Reaktionsdauer [h]** |
|---|---|---|---|---|
| **(1)** | 1 / 2 / 6 | 2,7/3,75/6 | 2,2 | 135; 2 |
| **(2)** | 1 / 0,3 / 4 | 2,7/0,56/4 | 0,3 | 135; 2 |
| **(3)** | 1 / 1 / 4 | 2,7/1,87/4 | 1,1 | 135; 2 |

Stärke und Harnstoff wurden miteinander vermischt und homogenisiert, anschließend mit Phosphorsäure versetzt und kräftig verrührt. Das Gemisch wurde dann für 2 h bei 135 °C in einem Umlufttrockenschrank umgesetzt. Nach Abkühlen wurden die Proben zwei Mal mit 60 %igem wässrigem Methanol und einmal mit reinem Methanol gewaschen. Die Proben wurden nach der Behandlung mit wässrigem Methanol mit Aceton zurückgefällt. Nach der Reinigung wurden die Proben getrocknet und zerkleinert. Es wurden Stärkephosphat-Carbamate aus Amylostärke, Kartoffelstärke sowie Wachsmaisstärke hergestellt. Bei der Verwendung der Stärkephosphat-Carbamate als FSM kann der Reinigungsschritt entfallen, da nicht derivatisierte bzw. zusätzliche Phosphorverbindungen und/oder zusätzlicher Harnstoff die flammenhemmende Wirkung vorteilhaft unterstützen.

**Ausführungsbeispiel 2 - Herstellung von Stärkephosphat-Carbamaten**

Bevorzugt werden Stärkephosphat-Carbamate in Anlehnung an *Heinze et al.* bei Temperaturen zwischen 20 und 200°C, besonders zwischen 75 und 150°C bei einem Druck größer als 13,3 kPa (100 Torr), bevorzugt 80 bis 200 kPa (600 bis 1500 Torr) hergestellt, wobei die Ausgangsstoffe in einem molaren Verhältnis Stärke : Phosphorsäure : Harnstoff 1 : 0,1 bis 2,0 : 4,0 bis 6,0, wobei nach der Umsetzung die gebildeten Stärkephosphat-Carbamate einen durchschnittlichen Substitutionsgrade $DS_P$ von 0,02 bis 1,5, besonders bevorzugt von 0,1 bis 1,0 und DSc von 0,01 bis 1, besonders bevorzugt von 0,01 bis 0,1. Die Bestimmung des Gesamtstickstoffgehalts erfolgt dabei über die Kjeldahl-Methode.

**Ausführungsbeispiel 3 - Ermittlung des Ammonium-Stickstoffs von Stärkephosphat-Carbamaten**

Zur Ermittlung des Gehalts an Ammonium-Stickstoff in Prozent, der koordinativ an den Phosphatgruppen der umgesetzten Stärke vorliegt (vgl. Figur 3) wurden drei verschiedene Stärkearten (WMS; KSE; AML) in Anlehnung an *Heinze et al.* in den molaren Verhältnissen von Stärke zu Phosphorsäure zu Harnstoff bei Normaldruck umgesetzt (vgl. nachfolgende Tabelle).

| **Bezeichnung** | **Molares Verhältnis AGU/$H_3PO_4$/Urea** | **WMS-$NH_4^+$ [%]** | **KSE-$NH_4^+$ [%]** | **AML- $NH_4^+$ [%]** |
|---|---|---|---|---|
| **b** | 1/0,3/4 | 2,46 | 2,14 | 3,12 |
| **c** | 1/1/4 | 5,85 | 5,60 | 5,60 |
| **d** | 1/1,7/6 | 6,71 | 7,22 | 7,02 |

Wie aus der Tabelle hervorgeht, steigt Ammonium-Stickstoff vom molaren Verhältnis 1/0,3/4 bis zum Verhältnis 1/2/6 bei allen drei Stärkearten deutlich an. Im Verhältnis 1/0,3/4 werden Werte von 2,14 bis 3,12% erreicht, welche im Verhältnis 1/2/6 auf Werte von 6,71 bis 7,22% ansteigen. Auffällig ist, dass der Ammonium-Stickstoff-Wert von 1/0,3/4 auf 1/1/4 ebenfalls stark ansteigt, obwohl der Harnstoffeinsatz als Stickstofflieferant gleich bleibt. Da auch der Anteil der Stärke gleichbleibt, könnte die Ammonium-Stickstoff-Bildung mit dem erhöhten Einsatz der Phosphorsäure zusammenhängen, welche die Umsetzung des Harnstoffs zu Ammoniak und Ammonium-Stickstoff katalysiert. Diese Annahme nicht ausschließend gibt es noch einen Zusammenhang der Ammonium-Stickstoff-Werte mit der Menge an Phosphatgruppen. Dabei handelt es sich um eine Korrelation zwischen den prozentualen P-Werten, also dem $DS_P$, und den Ammonium-Stickstoff-Werten. Beide Werte steigen nicht nur im selben Maße an, sie besitzen auch ähnliche Beträge. Diese Korrelation ist auf die Interaktion von Ammonium mit den Phosphat-Gruppen, bspw. nach folgenden Reaktionsgleichungen zurückzuführen.

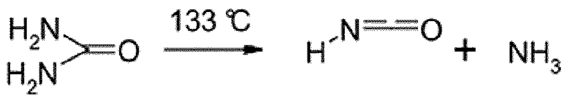

(1)

$NH_3 + H_3PO_4 \rightarrow NH_4H_2PO_4$ (2)

Zur Ermittlung des Ammoniumgehalts in den Proben umgesetzten Amylosestärken (b-d) wurden Raman-Spektren der einzelnen Proben mit einem FT-Raman-Spektrometer - MultiRAM III (Bruker Optics GmbH) aufgenommen. Die Auswertung erfolgte auf Grundlage der Auswertungssoftware OPUS Spectroscopy Software Version 6 (Bruker Optics). Für die Durchführung der Raman-Spektroskopie erfolgte keine spezielle Probenvorbereitung. Als Referenz diente eine native Amylostärke.

Raman-Spektren nativer Stärke (Amylostärke) lassen sich durch spezifische Banden innerhalb der Fingerprint-Region (1600-250 $cm^{-1}$) charakterisieren. Aus Fig. 1 ist ersichtlich, dass die $NH_4^+$-Bande bei einer Wellenzahl von 1715-1700 $cm^{-1}$ mit zunehmendem Substitutionsgrad $DS_P$ entsprechend zum Phosphorgruppengehalt in ihrer Signalintensität ansteigt.

Somit ist ersichtlich, dass der Gesamt-Stickstoffgehalt bezogen auf die Polysaccharidderivate sowohl den durch die Carbamatgruppen bedingten Amid-Gehalt, als auch den durch das koordinierte Ammonium (Figur 3) bedingten Stickstoffgehalt umfasst. Die, wie ersichtlich, ebenfalls bei der Synthese entstehenden Ammoniumphosphate fallen im Sinne der vorliegenden Erfindung unter die zusätzlichen Phosphatverbindungen, insbesondere unter die nicht bei der Derivatisierung umgesetzten Phosphatverbindungen.

**Ausführungsbeispiel 4 - Ermittlung des Amid-Stickstoffs von Stärkephosphat-Carbamaten**

Zur Ermittlung des Gehalts an Amid-Stickstoff wurden analog zum Beispiel 2 drei verschiedene Stärkearten (WMS; KSE; AML) in Anlehnung an *Heinze et al.* mit den molaren Verhältnissen von Stärke zu Phosphorsäure zu Harnstoff bei Normaldruck, wie in der vorangegangenen Tabelle aufgeführt, umgesetzt.

| Bezeichnung | Molares Verhältnis $AGU/H_3PO_4$/Urea | WMS-N-x [%] | $DS_c$ | KSE-N-x [%] | $DS_c$ | AML-N-x [%] | $DS_c$ |
|---|---|---|---|---|---|---|---|
| **b** | 1/0,3/4 | 0,38 | **0,045** | 0,73 | **0,086** | 0,38 | **0,045** |
| **c** | 1/1/4 | 0,28 | **0,033** | 0,28 | **0,033** | 0,37 | **0,043** |
| **d** | 1/1,7/6 | 0,25 | **0,029** | 0,00 | **0,000** | 0,15 | **0,017** |

Es ist zu erkennen, dass der Amid-Stickstoff der Proben mit steigendem molaren Verhältnis der Edukte abnimmt. Damit verhält er sich gegenläufig zum Ammonium-Stickstoff, welcher wie bereits erwähnt, mit steigendem molaren Verhältnis zunimmt. Zudem sind die Mengen im Vergleich zu den Anteilen des Ammonium-Stickstoffs relativ gering. Auch ergibt sich eine negative Korrelation des Amid-Stickstoffs und des DSc mit dem Phosphatgehalt und dem $DS_P$. Der Anstieg des $DS_P$ und die gleichzeitige Abnahme des DSc sind auf die Reaktionskinetik der Umsetzung zurückzuführen. Die Phosphatgruppen bilden sich zeitlich vor den Carbamatgruppen, da eine direkte Reaktion der Phosphorsäure mit der Stärke stattfindet, die zur Bildung der Phosphatgruppen führt.

**Ausführungsbeispiel 5 - Ionenaustausch**

Die Reinigung von Produkten für Analysezwecke erfolgte durch mehrmaliges Waschen in Wasser und Zurückfällen mit Aceton. Der Stickstoff-Gehalt eines 1x, 2x bzw. 3x entsprechend gereinigten Stärke-Phosphates betrug 23,6; 9,1 bzw. 8,2%.

Aus Fig. 3 ist ersichtlich, dass nach dem Austausch von Ammonium gegen Natrium durch Suspendieren die charakteristische Bande der $NH_4^+$-Deformationsschwingung bei einer Wellenzahl von 1700 $cm^{-1}$ verschwindet.

**Ausführungsbeispiel 6 - Herstellung des Holzverbundwerkstoffs**

Ausgangsmaterial für den erzeugten Holzverbundwerkstoff war TMP-Kiefernfaserstoff, hergestellt mit einem Mahlspalt von 0,35 mm. Der Kiefernfaserstoff wurde auf einen definierten Feuchtegehalt von 8 % getrocknet. Die Stärkenphosphat - Carbamate wurden in Wasser gequollen bzw. gelöst und zu einer gut fließfähigen Suspension verrührt. Jeweils ein wie oben beschriebenes Stärkephosphat-Carbamat wurde dem in einem Drais-Ringmischer befindlichen Faserstoff über ein Beleimaggregat mittels Pressluft zugeführt. Kam es bei der Benetzung der Fasern zu deren Verklumpen, wurden diese in einem zusätzlichen Schritt entweder in einem Lödige-Flugscharmischer oder in einem Refiner der Firma Andritz wieder vereinzelt. Im Anschluss erfolgte die Heißpressung mittels einer Siempelkamp Laborpresse zu Plattenfliesen mit den Abmaßen 300 mm * 300 mm * 10 mm und einer Sollrohdichte von 200 $kg/m^3$. Alle Proben hatten einen Anteil von 20 Gew.-% der Stärkephosphat-Carbamate in Bezug auf das Gesamtgewicht des Verbundwerkstoffs.

**Ausführungsbeispiel 7 - Brandprüfung des Holzverbundwerkstoffs**

Die Brandprüfung wurde in Anlehnung an DIN 4102 zur Ermittlung der Baustoffklasse B2 (Normal entflammbar) durchgeführt. Abweichend wurde kein Brennkasten nach DIN 50050-1 verwendet, sondern ein konventioneller Laborabzug. Statt eines Brenners nach DIN 50051 wurde ein Campinggasbrenner verwendet, der mit Propan/Butan gefeuert wurde. Die gesamte Durchführung der Prüfung erfolgte streng nach DIN 4102-1 Abschnitt 6.2 "Baustoffklasse B2".

Aus den zuvor produzierten Platten wurden 5 Prüfkörper je Stärkevariante zur Kantenbeflammung mit dem Abmaß 190 mm * 90 mm * 10 mm erzeugt. Die Proben wurden vor der Prüfung 14 Tage im Normalklima DIN 50014-23/50-2 gelagert. Die Prüfkörper wurden mit einer Messmarke in 150 mm Abstand zur Unterkante in voller Probenbreite markiert. Dann wurden sie in einer Haltevorrichtung senkrecht fixiert und mit einem im Winkel von 45 ° geneigten Brenner 15 Sekunden lang beflammt.

Gemessen wurde die Zeit von Beginn der Beflammung bis zu dem Zeitpunkt, bei der die Flammenspitze der brennenden Probe die Messmarke erreicht, sofern die Flamme nicht vorher erlischt. Die Prüfung gilt als bestanden, wenn bei keiner der fünf Prüfkörper einer Variante die Flammenspitze die Messmarke vor Ablauf der 20 Sekunden erreicht.

Zur besseren Differenzierung der Ergebnisse wurde eine zusätzliche Kenngröße, die Brennhöhe, verwendet. Die Brennhöhe ist der Mittelwert der Höhen in cm (max. 15 cm), die die Brandkegel (verkohltes Material) durch die Beflammung, inklusive Nachbrennen, bis zum selbstständigen Erlöschen des Probenkörpers auf den Proben Vorder- und Rückseiten aller fünf Proben erreicht haben.

Denselben Prüfverfahren wurden zwei Nullplaten, ohne Flammschutzapplikation, nur aus Fasermaterial und zum einen 10 Gew.-% MUF- Harz und zum anderen 4 Gew.-% PMDI-Leim, unterzogen.

Durch das Erreichen und bzw. Überschreiten der 15 cm-Markierung wurden die Nullplatten (MUF- und PMDI-Harz) der Baustoffklasse B3 zugeordnet. Hingegen wurden alle mit Stärkephosphat-Carbamaten behandelten Platten der Baustoffklasse B2 zugeordnet. Zudem kam es bei allen Prüfkörpern der Nullplatten nach der Beflammung zu einem selbstständigen Weiterbrennen, bei einigen dadurch zum vollständigen Abbrand. Die Brennhöhe betrug somit 15+ cm. Für alle mit den Stärkephosphat-Carbamaten versehenen Prüfkörper wurden hingegen Brennhöhen von unter 10 cm erreicht. Insbesondere betrugen die Werte der Brennhöhe für die Platte mit Amylostärkephosphatcarbamat 8,60 cm, für die Platte mit Kartoffelstärkephosphatcarbamat 8,30 cm und für die Platte mit Wachsmaisstärkephosphatcarbamat 8,50 cm. Somit konnten für alle erfindungsgemäßen Holzwerkstoffe ein deutlich verbesserter Flammschutz festgestellt werden.

## Patentansprüche

1. Verwendung wasserlöslicher Stickstoff- und Phosphor-haltiger Polysaccharidderivate, jeweils mit einem Stickstoff- sowie Phosphorgehalt von jeweils 2,5 - 25 %, als Flammschutzmittel in Holz- und Holzverbundwerkstoffen, deren Hydroxylgruppen zum Teil durch Phosphatgruppen und Carbamatgruppen verestert sind, wobei der Substitutionsgrad hinsichtlich der Phosphatgruppen 0,02 - 1,5 und der Substitutionsgrad hinsichtlich der Carbamatgruppen 0,01 - 0,5 beträgt.

**2.** Holzverbundwerkstoff mit verbesserten Flammschutzeigenschaften, aufweisend

a) 1 - 50 Gew.-% Stickstoff- und Phosphor-haltige Polysaccharidderivate, mit einem Stickstoff- und Phosphorgehalt von jeweils 2,5 - 25 %,
b) 0,5 - 5 Gew.-% Bindemittel und/oder Zuschlagstoffe,
c) (a) und (b) in Verbund mit lignocellulosehaltigen Fasern und/oder Spänen
d) sowie eine Dichte von 50 - 1200 kg/$m^3$.

**3.** Holzverbundwerkstoff nach Anspruch 2, **dadurch gekennzeichnet, dass** die Bindemittel und/oder Zuschlagstoffe ebenfalls Stickstoff- und Phosphorhaltige Polysaccharidderivate sind.

**4.** Verfahren zur Herstellung eines Holzverbundwerkstoffes mit verbesserten Flammschutzeigenschaften nach einem der Ansprüche 2 oder 3, wobei lignocellulosehaltigen Holzfasern oder -späne

a) mit einer Stickstoff- sowie Phosphor-haltige Polysaccharidderivate enthaltenden Lösung oder Suspension benetzt oder
b) mit Stickstoff- sowie Phosphor-haltige Polysaccharidderivate in Form eines trockenen Pulvers oder Granulats vermischt oder
c) mit Stickstoff- sowie Phosphorhaltige Polysaccharidderivate enthaltenden Bindemittel vermischt

und anschließend verdichtet und/oder verpresst werden.

**5.** Verwendung nach einem der Ansprüche 1, **dadurch gekennzeichnet, dass** die Stickstoff- und Phosphor-haltigen Polysaccharidderivate in einem Anteil von 1 - 50 Gew.-% mit oder ohne Zugabe von Bindemitteln und/oder Zuschlagstoffen mit lignocellulosehaltigen Fasern oder Spänen gemischt werden und diese Mischung zu Holzverbundwerkstoffen weiterverarbeitet wird.

**6.** Verwendung nach einem der Ansprüche 1 oder 5, **dadurch gekennzeichnet, dass** das Flammschutzmittel als Beschichtung auf Holz, einem Holzwerkstoff oder einem Holzverbundwerkstoff appliziert wird.

## Claims

**1.** Use of water-soluble nitrogen- and phosphorus-containing polysaccharide derivatives, having a nitrogen and phosphorus content of 2.5-25% each, as flame retardants in wood materials and wood composite materials, the hydroxyl groups of which are partially esterified by phosphate groups and carbamate groups, wherein the degree of substitution with respect to the phosphate groups is 0.02-1.5 and the degree of substitution with respect to the carbamate groups is 0.01-0.5.

**2.** Wood composite material having improved flame-retardant properties, comprising

a) 1-50 wt.% nitrogen- and phosphorus-containing polysaccharide derivatives, having a nitrogen and phosphorus content of 2.5-25% each,
b) 0.5 to 5 wt.% binders and/or additives,
c) (a) and (b) in combination with lignocellulosic fibres and/or chips
d) and a density of 50-1200 kg/$m^3$.

**3.** Wood composite material according to claim 2, **characterised in that** the binders and/or additives are also nitrogen- and phosphorus-containing polysaccharide derivatives.

**4.** Method for producing a wood composite material having improved flame-retardant properties according to either claim 2 or claim 3, wherein lignocellulosic wood fibres or chips

a) are wetted with a solution or suspension containing nitrogen- and phosphorus-containing polysaccharide derivatives or

b) are mixed with nitrogen- and phosphorus-containing polysaccharide derivatives in the form of a dry powder or granules or
c) are mixed with binders containing nitrogen- and phosphorus-containing polysaccharide derivatives

and are then compacted and/or compressed.

**5.** Use according to any of claims 1, **characterised in that** the nitrogen- and phosphorus-containing polysaccharide derivatives are mixed with lignocellulosic fibres or chips in a proportion of 1-50 wt.% with or without the addition of binders and/or additives, and this mixture is further processed to form wood composite materials.

**6.** Use according to either claim 1 or claim 5, **characterised in that** the flame retardant is applied as a coating on wood, a wood material or a wood composite material.

## Revendications

**1.** Utilisation de dérivés polysaccharidiques hydrosolubles contenant de l'azote et du phosphore, ayant chacun une teneur en azote et en phosphore comprise entre 2,5 et 25 %, comme agent ignifuge dans des matériaux dérivés du bois et dans des matériaux composites à base de bois, dont les groupes hydroxyle sont partiellement estérifiés par des groupes phosphate et carbamate, le degré de substitution concernant les groupes phosphate étant compris entre 0,02 et 1,5 et le degré de substitution concernant les groupes carbamate étant compris entre 0,01 et 0,5.

**2.** Matériau composite à base de bois ayant des propriétés ignifuges améliorées, présentant

a) 1 à 50 % en poids de dérivés polysaccharidiques contenant de l'azote et du phosphore, ayant chacun une teneur en azote et en phosphore comprise entre 2,5 et 25 %,
b) 0,5 à 5 % en poids d'agent de liaison et/ou d'adjuvants,
c) (a) et (b) en combinaison avec des fibres et/ou des copeaux lignocellulosiques,
d) et une densité comprise entre 50 et 1 200 kg/$m^3$.

**3.** Matériau composite à base de bois selon la revendication 2, **caractérisé en ce que** les agents de liaison et/ou les adjuvants sont également des dérivés polysaccharidiques contenant de l'azote et du phosphore.

**4.** Procédé de production d'un matériau composite à base de bois ayant des propriétés ignifuges améliorées selon l'une des revendications 2 ou 3, dans lequel des fibres ou des copeaux de bois lignocellulosiques sont

a) humidifiés au moyen d'une solution ou suspension contenant des dérivés polysaccharidiques contenant de l'azote et du phosphore, ou
b) mélangés avec des dérivés polysaccharidiques contenant de l'azote et du phosphore sous forme de poudre sèche ou de granulés, ou
c) mélangés avec des agents de liaison contenant des dérivés polysaccharidiques contenant de l'azote et du phosphore,

et sont ensuite compactés et/ou comprimés.

**5.** Utilisation selon l'une des revendications 1, **caractérisée en ce que** les dérivés polysaccharidiques contenant de l'azote et du phosphore sont mélangés dans une proportion de 1 à 50 % en poids avec des fibres ou des copeaux lignocellulosiques, avec ou sans addition d'agents de liaison et/ou d'adjuvants, et ce mélange étant ensuite transformé en matériaux composites à base de bois.

**6.** Utilisation selon l'une des revendications 1 ou 5, **caractérisée en ce que** l'agent ignifuge est appliqué comme revêtement sur du bois, un matériau dérivé du bois ou un matériau composite à base de bois.

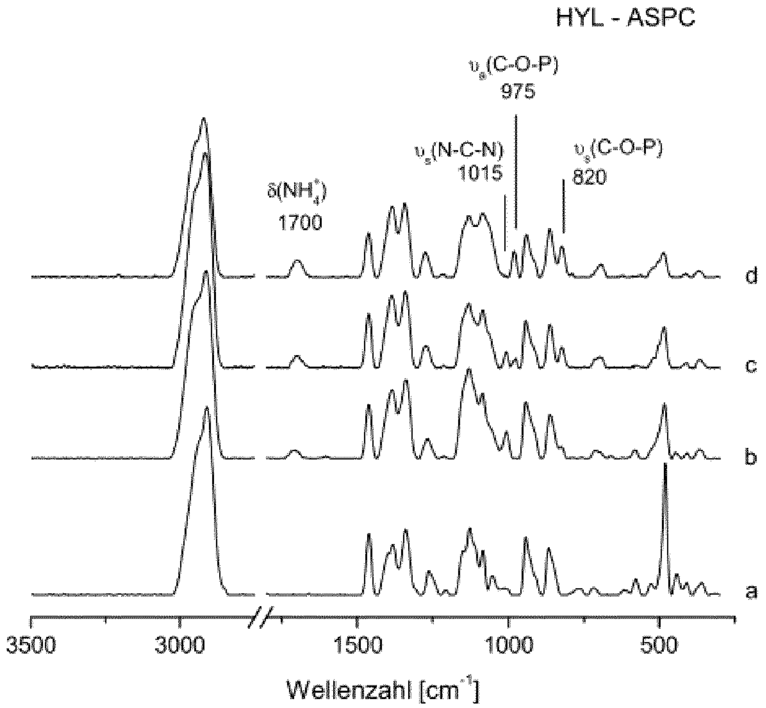
HYL - ASPC
υa(C-O-P)
975
υs(N-C-N)
1015
υs(C-O-P)
820
δ(NH4+)
1700
d
c
b
a
3500
3000
1500
1000
500
Wellenzahl [cm-1]

Fig. 1

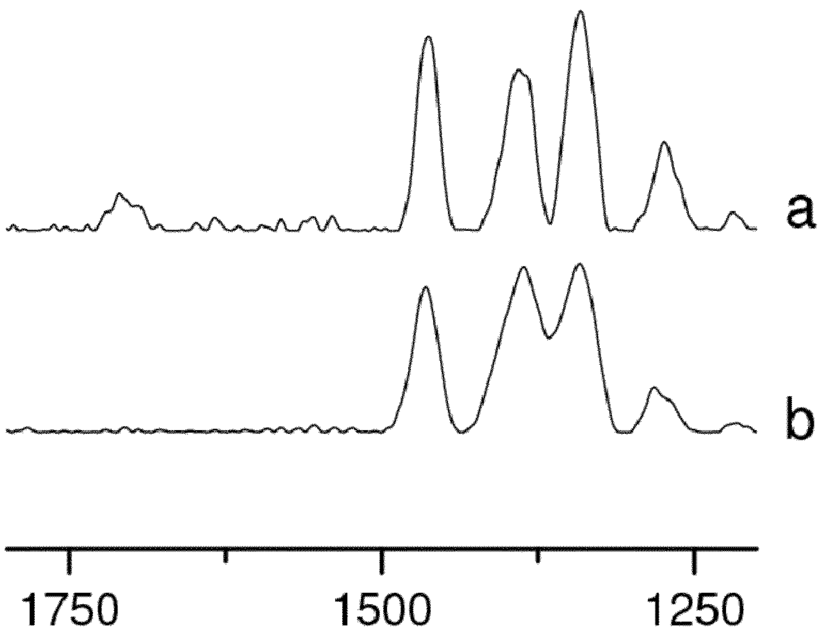
a
b
1750
1500
1250

Fig. 2

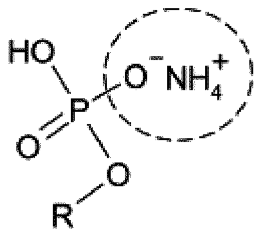

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4114068 A1
- US 20100178358 A1
- US 20040099178 A1
- US 3250756 A
- WO 9116403 A1
- DE 19859123 C1


### In der Beschreibung aufgeführte Nicht-Patentliteratur


- **HEINZE et al.** New Starch Phosphate Carbamides of High Swelling Ability: Synthesis and Characterization. *Starch/Stärke,* 2003, vol. 55, 55-60
- **PASSAUER et al.** *Carbohydrate Polymers,* 2010, vol. 82, 809-814
- **HEINZE ; KLEMM ; UNGER ; PIESCHEL.** *Starch,* 2003, vol. 55, 55-60
- **HEINZE U. ; KLEMM D. ; UNGER E. ; PIESCHEL F.** New Starch Carbamides of High Swelling Ability: Synthesis and Characterization. *Starch,* 2003, vol. 55, 55-60